(19) Europäisches Patentamt
European Patent Office
Office européen des brevets

(11) **EP 0 785 381 B1**

(12) **EUROPÄISCHE PATENTSCHRIFT**

(45) Veröffentlichungstag und Bekanntmachung des Hinweises auf die Patenterteilung:
**24.10.2001   Patentblatt 2001/43**

(51) Int Cl.$^7$: **F16H 61/38**, F16H 61/02

(21) Anmeldenummer: **97100312.4**

(22) Anmeldetag: **10.01.1997**

(54) **Verfahren zur Regelung stufenloser Getriebe von Kraftfahrzeugen**

Method of controlling a continuously variable transmission of motor vehicles

Procédé de régulation d'une transmission à variation continue de véhicules

(84) Benannte Vertragsstaaten:
**FR GB IT SE**

(30) Priorität: **20.01.1996   DE 19602032**

(43) Veröffentlichungstag der Anmeldung:
**23.07.1997   Patentblatt 1997/30**

(73) Patentinhaber: **Conti Temic microelectronic GmbH**
**90411 Nürnberg (DE)**

(72) Erfinder:
• **Genzel, Michael**
**90574 Rosstal (DE)**

• **Möller, Rodolfo**
**90461 Nürnberg (DE)**
• **Tonn, Armin**
**91154 Roth (DE)**

(74) Vertreter: **Maute, Hans-Jürgen, Dipl.-Ing.**
**TEMIC TELEFUNKEN microelectronic GmbH**
**Postfach 35 35**
**74025 Heilbronn (DE)**

(56) Entgegenhaltungen:
**EP-A- 0 697 548        FR-A- 2 699 978**
**GB-A- 2 220 038        US-A- 4 852 429**

**Beschreibung**

Die Erfindung betrifft ein Verfahren gemäß dem Oberbegriff des Patentanspruchs 1 wie es aus der US 4,852,429 bekannt ist.

Die Antriebseinheit von Kraftfahrzeugen (der Motor und das dazugehörige Getriebe) wird in zunehmendem Maße Regelungs- und Steuerungsmechanismen unterworfen, um das Zusammenspiel des Motors mit dem Getriebe zu optimieren; beispielsweise muß zur Senkung des Kraftstoffverbrauchs von Kraftfahrzeugen neben einer verbesserten Ansteuerung des Motors auch die Getriebeübersetzung angepaßt werden. Hierfür bieten sich Automatikgetriebe an, wobei in zunehmendem Maße stufenlose Getriebe (CVT-Getriebe: "Continuous Variable Transmission") eingesetzt werden, bei denen das Getriebe so lange verstellt wird, bis sich das gewünschte Getriebeübersetzungsverhältnis eingestellt hat. Durch ein zwischen den Scheiben zweier Scheibensätze angeordnetes Transmissionselement (Kette, Band, Riemen etc.) kann das erforderliche Getriebeübersetzungsverhältnis kontinuierlich (stufenlos) verändert werden: durch Anlegen des gleichen Werts der Anpreßkraft auf die beiden Scheibensätze - dies entspricht der sog. Vorspannkraft -, wird das Kraftniveau für das Transmissionselement eingestellt; durch Vorgabe unterschiedlicher Werte der Anpreßkraft auf die beiden Scheibensätze wird eine zusätzliche Kraftkomponente zum Transport des Transmissionselements erzeugt, wobei durch Variation der Anpreßkraft und damit der Transportkraft das Getriebeübersetzungsverhältnis in beliebigen Schritten stufenlos variiert werden kann. In die Regelverfahren können zudem adaptive Strategien zur Anpassung vorgegebener Regelkennfelder an den Fahrertyp ("Langzeitstrategie": Motorleistungsbedarf des jeweiligen Fahrers), an die Umwelt ("mittelfristige Strategie": beispielsweise Schlupferkennung, Anhängerfahrt, Bergfahrt) und an die aktuelle Fahrsituation ("Kurzzeitstrategie": beispielsweise Überholvorgänge) inkorporiert werden.

Aus der eingangs erwähnten gattungsgemäßen US 4,852,429 ist ein Verfahren zur Regelung stufenlos verstellbarer Getriebe bekannt, bei dem einem ersten Regelkreis mit der gemessenen Getriebeeingangsdrehzahl als Regelgröße ein zweiter Regelkreis mit der zeitlichen Ableitung der Getriebeeingangsdrehzahl als Regelgröße unterlagert ist. Bei dem als Drehzahlregler ausgebildeten Regelkreis wird die Getriebeeingangsdrehzahl bzw. Antriebsdrehzahl geregelt. Hierzu weist der Regelkreis am Reglereingang ein Summationsglied auf, dem als erster Summand der Sollwert der Getriebeeingangsdrehzahl als Führungsgröße und als zweiter Summand der Istwert der Getriebeeingangsdrehzahl als Regelgröße zugeführt wird; die durch Differenzbildung der beiden Größen Sollwert der Getriebeeingangsdrehzahl und Istwert der Getriebeeingangsdrehzahl am Ausgang des Summationsglieds erhaltene Regelabweichung wird einem Regelglied aus Proportionalregler, Begrenzer und Tiefpaß zugeführt, an dessen Ausgang (dem Reglerausgang) die zeitliche Ableitung der Getriebeeingangsdrehzahl ansteht. zur Verbesserung des Regelverhaltens ist dem Drehzahlregler ein zweiter Regelkreis in der Art eines Beschleunigungsreglers unterlagert, bei dem die vom Reglerausgang des Drehzahlreglers als Sollwert bereitgestellte zeitliche Ableitung der Getriebeeingangsdrehzahl die Führungsgröße bildet; d.h. zusätzlich zur Drehzahlregelung erfolgt eine Drehzahländerungsregelung.

Nachteilig bei diesem Verfahren zur Regelung stufenlos verstellbarer Getriebe ist, daß eine - oftmals wünschenswerte - Kontrolle, Begrenzung oder Unterdrückung des Regelverhaltens bezüglich der Stellgröße Getriebeübersetzungsverhältnis nicht möglich ist, da nur die Regelgröße Getriebeeingangsdrehzahl als Maß für das Getriebeübersetzungsverhältnis überwacht wird: bsp. kann es daher beim Beschleunigen oder Verzögern des Fahrzeugs durch die unterlagerte Drehzahländerungsregelung zu einer unerwünschten Änderung des Getriebeübersetzungsverhältnisses und damit zu einer Verstellung des Getriebes kommen - insbesondere kann hierdurch ein ungewolltes Hineinlaufen in die sog. mechanische Endlage des Getriebes auftreten, in der die Festigkeit und/oder die Lebensdauer des Transmissionselements beeinträchtigt bzw. das Transmissionselement zerstört werden kann.

Der Erfindung liegt die Aufgabe zugrunde, ein Verfahren zur Regelung stufenlos verstellbarer Getriebe von Kraftfahrzeugen anzugeben, bei dem auf einfache Weise eine Überwachung bzw. Kontrolle der Regelung ermöglicht wird.

Diese Aufgabe wird erfindungsgemäß durch die Merkmale im Kennzeichen des Patentanspruchs 1 gelöst.

Vorteilhafte Weiterbildungen und Ausgestaltungen der Erfindung ergeben sich aus den weiteren Patentansprüchen.

Beim vorgestellten Verfahren zur Regelung stufenloser Getriebe von Kraftfahrzeugen wird mittels eines modifizierten zweistufigen Reglers mit einem ersten Regelkreis als Drehzahlregler und einem dem ersten Regelkreis unterlagerten zweiten Regelkreis als Drehzahländerungsregler der Einfluß der Regelung auf die Stellgröße Getriebeübersetzungsverhältnis als einer der beiden in die Regelgröße Getriebeeingangsdrehzahl (Drehzahlregler) bzw. in die Regelgröße zeitliche Ableitung der Getriebeeingangsdrehzahl (Drehzahländerungsregler) eingehenden Produktfaktoren kontrolliert; insbesondere wird in Abhängigkeit vorgegebener Randbedingungen der Einfluß der Regelung auf die Stellgröße Getriebeübersetzungsverhältnis in bestimmten Regelbereichen weitgehend oder vollständig unterdrückt ("ausgeblendet"), so daß in diesen Regelbereichen eine (in-folge der Regelung zwangsläufig auftretende, jedoch unerwünschte) Änderung des Getriebeübersetzungsverhältnisses verhindert wird. Hierzu wird das die Regelabweichung als Differenz zwischen dem momentanen Istwert der rückgeführten Regelgröße und dem Sollwert der Regelgröße bildende Summationsglied am Eingang eines der beiden Regelkreise (d. h. entweder des ersten Regelkreises zur Drehzahlregelung oder des zweiten Regelkreises zur Drehzahländerungsregelung) mit einem Korrekturwert beaufschlagt. Dieser Korrekturwert wird abhängig vom Funktionswert einer Korrekturfunktion mittels eines Korrekturglieds bestimmt (bsp. durch Multiplikation des Funktionswerts der Korrekturfunktion mit einem bestimmten Faktor), wobei der Verlauf der Korrekturfunktion in Abhängigkeit verschiedener Kriterien festgelegt bzw. variiert werden kann (bsp. in Abhängigkeit der Fahrsituation, der Fahrzeuggeschwindigkeit, des Getriebeübersetzungsverhältnisses, des Fahrertyps, der Größe der Regelabweichung etc.). Die Anzahl der durch die Beaufschlagung des Summationsglieds mit dem Korrekturwert gebildeten Regelbereiche ("normale" Regelbereiche mit uneingeschränkter Regelung, "kontrollierte" Regelbereiche mit eingeschränkter Regelung und "Übergangs"-Regelbereiche zwischen den "normalen" Regelbereichen und den "kontrollierten" Regelbereichen) und deren Bereichsgrenzen können durch Variation des Verlaufs der Korrekturfunktion bzw. deren Funktionswerte oder durch Variation des Korrekturglieds an die jeweiligen Anforderungen angepaßt werden - vorzugsweise werden durch entsprechende Wahl des Verlaufs der Korrekturfunktion fünf Regelbereiche definiert, ein kontrollierter Regelbereich im Bereich des Minimalwerts der Stellgröße Getriebeübersetzungsverhältnis, ein kontrollierter Regelbereich im Bereich des Maximalwerts der Stellgröße Getriebeübersetzungsverhältnis, ein normaler Regelbereich im Bereich des Normalwerts der Stellgröße Getriebeübersetzungsverhältnis und jeweils ein Übergangs-Regelbereich zwischen den beiden kontrollierten Regelbereichen und dem "normalen" Regelbereich. Weiterhin können durch entsprechende Wahl des Verlaufs der Korrekturfunktion die Übergangs-Regelbereiche und damit die Übergänge von einem "normalen" Regelbereich zu einem "kontrollierten" Regelbereich beliebig vorgegeben werden - bsp. kann entweder ein stufenförmiger (abrupter) Übergang oder ein stufenloser (weicher) Übergang zwischen einem normalen" Regelbereich und einem "kontrollierten" Regelbereich realisiert werden.

Durch die Vorgabe unterschiedlicher Regelbereiche infolge der Beaufschlagung des Summationsglieds mit dem Korrekturwert wird vorteilhafterweise eine kontrollierte Regelung ermöglicht, so daß ungewollte, oftmals schädliche Änderungen der Stellgröße Getriebeübersetzungsverhältnis verhindert werden.

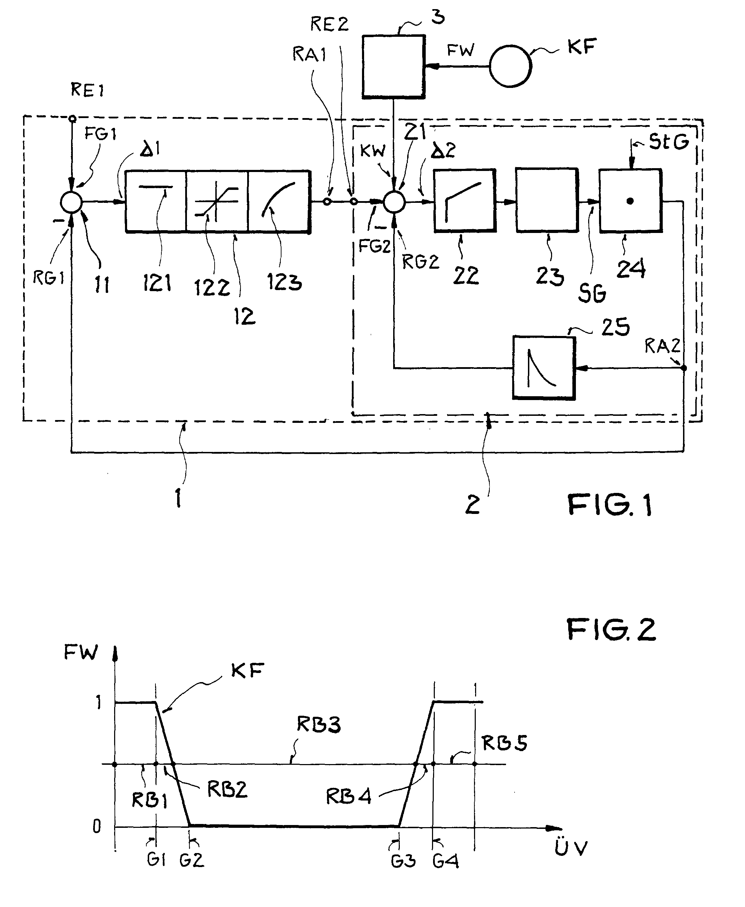

Anhand der Zeichnung wird das Regelverfahren erläutert, wobei in der Figur 1 ein Blockschaltbild des Reglers mit den beiden Regelkreisen dargestellt ist und die Figur 2 ein Beispiel für den Verlauf der Korrekturfunktion zeigt.

Gemäß der Figur 1 besteht der zweistufige Regler aus dem ersten Regelkreis 1 (Drehzahlregler) zur Regelung der Getriebeeingangsdrehzahl $n_{IN}$ als Produkt $n_{OUT} \cdot$ ÜV der Getriebeausgangsdrehzahl $n_{OUT}$ (diese ist proportional zur Geschwindigkeit des Kraftfahrzeugs) und des Getriebeübersetzungsverhältnisses ÜV und aus dem dem ersten Regelkreis 1 unterlagerten zweiten Regelkreis 2 (Drehzahländerungsregler) zur Regelung der zeitlichen Ableitung d/dt der Getriebeeingangsdrehzahl $n_{IN}$ sowie aus dem Korrekturglied 3 zur Generierung des Korrekturwerts KW nach Maßgabe der Korrekturfunktion KF.

Der erste Regelkreis 1 weist am Eingang RE1 ein Summationsglied 11 auf, dem als erster Summand der Sollwert $n_{IN,SOLL}$ der Getriebeeingangsdrehzahl $n_{IN}$ als Führungsgröße FG1 und als zweiter Summand der Istwert $n_{IN,IST}$ der Getriebeeingangsdrehzahl $n_{IN}$ als Regelgröße RG1 zugeführt wird. Die durch Differenzbildung der beiden Größen $n_{IN,SOLL}$ und $n_{IN,IST}$ am Ausgang des Summationsglieds 11 gebildete Regelabweichung $\Delta 1$ ($\Delta 1 = n_{IN,SOLL} - n_{IN,IST}$) wird dem Regelkreisglied 12 aus Proportionalübertragungsglied 121, Begrenzer 122 und Tiefpaß 1. Ordnung 123 zugeführt, an dessen Ausgang (dem Ausgang RA1 des Regelkreisglieds 12) der Sollwert $d/dt(n_{IN,SOLL})$ der zeitlichen Ableitung $d/dt(n_{IN})$ der Getriebeeingangsdrehzahl $n_{IN}$ ansteht.

Der zweite Regelkreis 2 weist am Reglereingang RE2 ein mit dem Ausgang RA1 des Regelkreisglieds 12 verbundenes Summationsglied 21 auf, dem als erster Summand der Sollwert $d/dt(n_{IN,SOLL})$ der zeitlichen Ableitung $d/dt(n_{IN})$ der Getriebeeingangsdrehzahl $n_{IN}$ als Führungsgröße FG2 und als zweiter Summand der Istwert $d/dt(n_{IN,IST})$ der zeitlichen Ableitung $d/dt(n_{IN})$ der Getriebeeingangsdrehzahl $n_{IN}$ als Regelgröße RG2 zugeführt wird. Die durch Differenzbildung der beiden Größen $d/dt(n_{IN,SOLL})$ und $d/dt(n_{IN,IST})$ am Ausgang des Summationsglieds 21 gebildete Regelabweichung $\Delta 2$ ($\Delta 2 = d/dt(n_{IN,SOLL}) - d/dt(n_{IN,IST})$) wird dem als PI-Regler ausgebildeten Regelglied 22 zugeführt, das über das Stellglied 23 bzw. die Regelstrecke als Stellgröße SG das Getriebeübersetzungsverhältnis ÜV vorgibt. Dem am Ausgang des Stellglieds 23 angeschlossenen Multiplikationsglied 24 wird als erster Produktfaktor die Stellgröße SG Getriebeübersetzungsverhältnis ÜV und als zweiter Produktfaktor die als Störgröße StG fungierende Getriebeausgangsdrehzahl $n_{OUT}$ zugeführt; durch Multiplikation der beiden Größen Getriebeübersetzungsverhältnis ÜV und Getriebeausgangsdrehzahl $n_{OUT}$ wird der Istwert $n_{IN,IST}$ der Getriebeeingangsdrehzahl $n_{IN}$ gebildet. Der Istwert $n_{IN,IST}$ der Getriebeeingangsdrehzahl $n_{IN}$ am Ausgang RA2 des zweiten Regelkreises 2 wird als Regelgröße RG1 dem Summationsglied 11 am Eingang RE1 des ersten Regelkreises 1 und einem Differenzierglied 25 zur Bildung der zeitlichen Ableitung zugeführt, die dann als Regelgröße RG2 dem Summationsglied 21 am Reglereingang RE2 des zweiten Regelkreises 2 zugeführt wird.

Vom Korrekturglied 3 wird in Abhängigkeit der Korrekturfunktion KF ein Korrekturwert KW generiert und mit diesem Korrekturwert KW das Summationsglied 21 am Reglereingang RE2 des zweiten Regelkreises 2 beaufschlagt; durch geeignete Wahl der Korrekturfunktion KF und des Korrekturglieds 3 wird das Regelverhalten des zweiten Regelkreises 2 (Drehzahländerungsregler) dahingehend beeinflußt, daß der Einfluß des Getriebeübersetzungsverhältnisses ÜV auf die Regelgröße Getriebeeingangsdrehzahl $n_{IN}$ kontrolliert wird. Durch die zusätzliche Addition des Korrekturwerts KW am Summationsglied 21 werden verschiedene Regelbereiche mit unterschiedlichem Regelverhalten gebildet, deren Anzahl und Bereichsgrenzen sowie die Übergänge zwischen den verschiedenen Regelbereichen durch geeignete Wahl des Verlaufs der Korrekturfunktion KF variiert werden können. Bsp. wird der dem Summationsglied 21 des zweiten Regelkreises 2 additiv zugeführte Korrekturwert KW vom Korrekturglied 3 durch Multiplikation des vom Getriebeübersetzungsverhältnis ÜV abhängigen Funktionswerts FW der Korrekturfunktion KF mit dem Faktor ÜV · d/dt($n_{OUT}$) gebildet; demzufolge erhält man in diesem Falle für die sich am Ausgang des Summationsglieds 21 des zweiten Regelkreises 2 ergebende Regelabweichung $\Delta 2$:

$$\Delta 2 = d/dt(n_{IN,SOLL}) - d/dt(n_{IN,IST}) + KW$$

$$= d/dt(n_{IN,SOLL}) - d/dt(\text{ÜV}) \cdot n_{OUT} - \text{ÜV} \cdot d/dt(n_{OUT}) + FW \, \text{ÜV} \cdot d/dt(n_{OUT}) \tag{1}$$

Wie aus der Gleichung (1) ersichtlich wird, kann über den Korrekturwert KW der Einfluß des Faktors ÜV · d/dt($n_{OUT}$) kontrolliert werden, d.h. die sich infolge der Regelung ergebende Vorgabe des Getriebeübersetzungsverhältnisses ÜV beeinflußt werden (bsp. kann der Wert des Getriebeübersetzungsverhältnisses ÜV konstant gehalten werden, obwohl er gemäß der Regelung variiert werden müßte).

Dies soll am Beispielsfall des eingeschwungenen Zustands der Regelung erläutert werden: im eingeschwungenen Zustand stimmen Sollwert und Istwert sowohl der Getriebeeingangsdrehzahl $n_{IN}$ (Regelkreis 1) als auch der zeitlichen Ableitung d/dt der Getriebeeingangsdrehzahl $n_{IN}$ (Regelkreis 2) überein, so daß die Regelabweichung $\Delta 1$ - demzufolge auch der Anteil d/dt($n_{IN,SOLL}$) am Ausgang 12 des Regelkreisglieds 1 - und die Regelabweichung $\Delta 2$ zu Null werden; aus Gleichung (1) ergibt sich für diesen Fall:

$$0 = 0 - d/dt(\text{ÜV}) \cdot n_{OUT} - \text{ÜV} \cdot d/dt(n_{OUT}) + FW \cdot \text{ÜV} \cdot d/dt(n_{OUT}) \tag{2}$$

$$d/dt(\text{ÜV}) \cdot n_{OUT} = - \text{ÜV} \cdot d/dt(n_{OUT}) + FW \cdot \text{ÜV} \cdot d/dt(n_{OUT}) \tag{3}$$

Wenn das Kraftfahrzeug nun im eingeschwungenen Zustand der Regelung beschleunigt oder verzögert (bsp. beim Anfahren), wird der von der zeitlichen Ableitung der Geschwindigkeit (der Beschleunigung) des Kraftfahrzeugs abhängige Term ÜV · d/dt($n_{OUT}$) in Gleichung (2) von Null verschieden ($n_{OUT}$ ist proportional zur Geschwindigkeit), so daß auch der Term d/dt(ÜV) · $n_{OUT}$ in Gleichung (3) sich von Null unterscheiden müßte, d. h. das Getriebeübersetzungsverhältnis ÜV würde infolge der Regelung zwangsläufig geändert. Dies kann dadurch verhindert werden, daß der Regelung durch die vom Funktionswert FW der Korrekturfunktion KF abhängige additive Korrekturgröße FW · ÜV d/dt($n_{OUT}$) in Gleichung (3) ein Gleichgewichtszustand aufgezwungen wird.

In der Figur 2 ist der beispielhafte Verlauf einer Korrekturfunktion KF mit dem Funktionswert FW als Funktion des Getriebeübersetzungsverhältnisses ÜV dargestellt.

Infolge des dort gewählten Verlaufs der Korrekturfunktion KF werden fünf Regelbereiche RB1, RB2, RB3, RB4, RB5 definiert, die voneinander durch die Grenzwerte G1, G2, G3, G4 als Bereichsgrenzen getrennt sind und die jeweils ein unterschiedliches Regelverhalten bewirken; bsp. erstreckt sich der erste Regelbereich RB1 vom Getriebeübersetzungsverhältnis ÜV = 0,3 bis zum Getriebeübersetzungsverhältnis ÜV = 0,4 (Grenzwert G1), der zweite Regelbereich RB2 als Übergangsbereich vom Getriebeübersetzungsverhältnis ÜV = 0,4 (Grenzwert G1) bis zum Getriebeübersetzungsverhältnis ÜV = 0,6 (Grenzwert G2), der dritte Regelbereich RB3 vom Getriebeübersetzungsverhältnis ÜV = 0,6 (Grenzwert G2) bis zum Getriebeübersetzungsverhältnis ÜV = 2,0 (Grenzwert G3), der vierte Regelbereich RB4 als Übergangsbereich vom Getriebeübersetzungsverhältnis ÜV = 2,0 (Grenzwert G3) bis zum Getriebeübersetzungsverhältnis ÜV = 2,2 (Grenzwert G2), und der fünfte Regelbereich RB5 vom Getriebeübersetzungsverhältnis ÜV = 2,2 (Grenzwert G4) bis zum maximalen Getriebeübersetzungsverhältnis ÜV = 2,4.

Im dritten Regelbereich RB3 ist der Funktionswert FW der Korrekturfunktion KF FW = 0; demnach ist auch der dem Summationsglied 21 des Regelkreises 2 (Drehzahländerungsregler) zugeführte Korrekturwert KW = 0, d. h. im dritten Regelbereich RB3 wird durch den Regelkreis 2 eine "normale" Regelung vorgenommen.

Im ersten Regelbereich RB1 und im fünften Regelbereich RB5 ist der Funktionswert FW der Korrekturfunktion KF und demnach auch der dem Summationsglied 23 des Regelkreises 2 (Drehzahländerungsregler) zugeführte Korrekturwert KW konstant und von Null verschieden; bsp. ist der Funktionswert FW im ersten Regelbereich RB1 und im fünften Regelbereich RB5 FW = 1, so daß man für den Korrekturwert KW den Wert KW = ÜV d/dt($n_{OUT}$) erhält. Gemäß Gleichung (2) wird durch diese Korrekturgröße der Anteil d/dt(ÜV) · $n_{OUT}$ gerade kompensiert; demzufolge ändert sich das Getriebeübersetzungsverhältnis ÜV nicht mehr und kann auch nicht durch die Beschleunigung oder Verzögerung des Kraftfahrzeugs beeinflußt werden.

Durch die beiden Übergangsbereiche zweiter Regelbereich RB2 und vierter Regelbereich RB4 wird das Übergangsverhalten zwischen den Regelbereichen RB1 und RB3 bzw. RB3 und RB5 festgelegt; der Übergang erfolgt gemäß der in der Figur 2 dargestellten Korrekturfunktion KF annähernd stufenförmig, indem der zweite Regelbereich RB2 und der vierte Regelbereich RB4 relativ schmal ausgeführt sind, wodurch der Funktionswert FW der Korrekturfunktion KF zwischen den Grenzwerten G1 und G2 bzw. den Grenzwerten G3 und G4 rasch geändert wird.

Für andere Anwendungsfälle bzw. Randbedingungen kann der Verlauf der Korrekturfunktion KF und damit die Vorgabe der verschiedenen Regelbereiche RB1, RB2, RB3, RB4, RB5 (Verlauf, Ausdehnung, Übergänge) entsprechend angepaßt bzw. variiert werden.

**Patentansprüche**

1.  Verfahren zur Regelung stufenlos verstellbarer Getriebe von Kraftfahrzeugen bei dem

    -   mit einem ersten Regelkreis (1) als Drehzahlregler die Getriebeeingangsdrehzahl ($n_{IN}$) geregelt wird, wobei einem Summationsglied (11) am Eingang (RE1) eines Regelkreisglieds (12) die Regelabweichung der Getriebeeingangsdrehzahl ($n_{IN}$) zugeführt wird,

    -   mit einem dem ersten Regelkreis (1) unterlagerten zweiten Regelkreis (2) als Drehzahländerungsregler die zeitliche Ableitung (d/dt) der Getriebeeingangsdrehzahl ($n_{IN}$) geregelt wird, wobei ein Summationsglied (21) am Reglereingang (RE2) des unterlagerten zweiten Regelkreises (2) mit dem Ausgang (RA1) des Regelkreisglieds (12) des ersten Regelkreises (1) verbunden wird,

        **dadurch gekennzeichnet,**

    -   daß die aus dem Produkt der Getriebeausgangsdrehzahl ($n_{OUT}$) und des Getriebeübersetzungsverhältnisses (ÜV) berechnete Getriebeeingangsdrehzahl ($n_{IN}$) geregelt wird,

    -   und daß das Summationsglied (11; 21) eines der beiden Regelkreise (1; 2) mit einem von einem Korrekturglied (3) gebildeten, vom Funktionswert (FW) einer Korrekturfunktion (KF) abhängigen Korrekturwert (KW) beaufschlagt wird, durch den Regelbereiche (RB1, RB2, RB3, RB4, RB5) für ein unterschiedliches Regelverhalten vorgegeben werden.

2.  Verfahren nach Anspruch 1, **dadurch gekennzeichnet, daß** Anzahl, Bereichsgrenzen und Regelverhalten für die Regelbereiche (RB1, RB2, RB3, RB4, RB5) nach Maßgabe vom Betrieb des Kraftfahrzeugs abhängiger Parameter oder Randbedingungen durch den Verlauf der Korrekturfunktion (KF) vorgegeben werden.

3.  Verfahren nach Anspruch 2, **dadurch gekennzeichnet, daß** Anzahl, Bereichsgrenzen und Regelverhalten für die Regelbereiche (RB1, RB2, RB3, RB4, RB5) nach Maßgabe der Fahrsituation und/oder der Geschwindigkeit des Kraftfahrzeugs und/oder des Getriebeübersetzungsverhältnisses (ÜV) und/oder des Fahrertyps und/oder der Größe der Regelabweichung vorgegeben werden.

4.  Verfahren nach einem der Ansprüche 1 bis 3, **dadurch gekennzeichnet, daß** mit dem Korrekturwert (KW) als Regelbereiche vorgegeben werden:

    -   mindestens ein normaler Regelbereich (RB3), in dem keine Beeinflussung des Regelverhaltens erfolgt,

    -   mindestens ein kontrollierter Regelbereich (RB1, RB5), in dem eine Beeinflussung des Regelverhaltens erfolgt,

    -   jeweils ein Übergangsbereich (RB2, RB4) zwischen einem kontrollierten Regelbereich (RB1, RB5) und einem normalen Regelbereich (RB3).

5.  Verfahren nach Anspruch 4, **dadurch gekennzeichnet, daß** in den kontrollierten Regelbereichen (RB1, RB5) die Auswirkung der Regelung auf die Stellgröße Getriebeübersetzungsverhältnis (ÜV) zumindest weitgehend unterdrückt wird.

6.  Verfahren nach Anspruch 5, **dadurch gekennzeichnet, daß** in den kontrollierten Regelbereichen (RB1, RB5) die Auswirkung der Regelung auf die Stellgröße Getriebeübersetzungsverhältnis (ÜV) vollständig unterdrückt wird.

**7.** Verfahren nach einem der Ansprüche 4 bis 6, **dadurch gekennzeichnet, daß** die Übergangsbereiche (RB2, RB4) so gewählt werden, daß der Übergang zwischen den kontrollierten Regelbereichen (RB1, RB5) und den normalen Regelbereichen (RB3) sprunghaft erfolgt.

**8.** Verfahren nach einem der Ansprüche 4 bis 6, **dadurch gekennzeichnet, daß** die Übergangsbereiche (RB2, RB4) so gewählt werden, daß der Übergang zwischen den kontrollierten Regelbereichen (RB1, RB5) und den normalen Regelbereichen (RB3) stetig und/oder kontinuierlich erfolgt.

**Claims**

**1.** A method of regulating a continuously variable transmission in motor vehicles wherein

- the input rotational speed ($n_{IN}$) of the transmission is regulated by a first control loop (1) in the form of a rotational speed regulator whereby the deviation of the input rotational speed ($n_{IN}$) of the transmission is supplied to a summing member (11) at the input (RE1) of a control loop element (12),

- the time derivative (d/dt) of the input rotational speed ($n_{IN}$) of the transmission is regulated by a second control loop (2) which is cascaded with the first control loop (1) and is in the form of a regulator for controlling the alteration of the rotational speed, whereby a summing member (21) at the regulating input (RE2) of the cascaded second control loop (2) is connected to the output (RA1) of the control loop element (12) in the first control loop (1),

**characterised in**

- that the input rotational speed ($n_{IN}$) of the transmission, which is calculated from the product of the output rotational speed ($n_{OUT}$) of the transmission and the transmission ratio (ÜV), is regulated,

- and **in that** a correcting value (KW), which is formed by a correcting member (3) and is dependent on the functional value (FW) of a correcting function (KF), is applied to the summing member (11; 21) in one of the two control loops (1; 2), whereby regulating ranges (RB1, RB2, RB3, RB4, RB5) having differing regulating behaviours are set by said correcting value (KW).

**2.** A method in accordance with Claim 1, **characterised in that** the number, the limits of the ranges and the regulating behaviours for the regulating ranges (RB1, RB2, RB3, RB4, RB5) are set according to parameters that are dependent on the operation of the motor vehicle or to boundary conditions, by the waveform of the correcting function (KF).

**3.** A method in accordance with Claim 2, **characterised in that** the number, the limits of the ranges and the regulating behaviours for the regulating ranges (RB1, RB2, RB3, RB4, RB5) are set according to the driving situation and/or the speed of the motor vehicle and/or the transmission ratio (ÜV) and/or the type of driver and/or the magnitude of the deviation.

**4.** A method in accordance with any of the Claims 1 to 3, **characterised in that** the following regulating ranges are set by the correcting value (KW):

- at least a normal regulating range (RB3) in which there is no effect upon the regulating behaviour,

- at least one controlled regulating range (RB1, RB5) in which there is an effect upon the regulating behaviour,

- a respective transition range (RB2, RB4) between a controlled regulating range (RB1, RB5) and a normal regulating range (RB3).

**5.** A method in accordance with Claim 4, **characterised in that** the effect of the regulation process on the regulated variable in the form of the transmission ratio (ÜV) is at least largely suppressed in the controlled regulating ranges (RB1, RB5).

6. A method in accordance with Claim 5, **characterised in that** the effect of the regulation process on the regulated variable in the form of the transmission ratio (ÜV) is completely suppressed in the controlled regulating ranges (RB1, RB5).

7. A method in accordance with any of the Claims 4 to 6, **characterised in that** the transition ranges (RB2, RB4) are selected in such a manner that the transition between the . controlled regulating ranges (RB1, RB5) and the normal regulating ranges (RB3) is effected in jump-like manner.

8. A method in accordance with any of the Claims 4 to 6, **characterised in that** the transition ranges (RB2, RB4) are selected in such a manner that the transition between the controlled regulating ranges (RB1, RB5) and the normal regulating ranges (RB3) is effected in steady and/or continuous manner.

**Revendications**

1. Procédé pour régler des boîtes de vitesses continûment variable de véhicules automobiles, selon lequel:

   - la vitesse de rotation d'entrée ($n_{IN}$) de la boîte de vitesses est réglée avec un premier circuit de régulation (1) en tant que régulateur de la vitesse de rotation, l'écart de régulation de la vitesse de rotation d'entrée ($n_{IN}$) de la boîte de vitesses étant envoyé à un circuit de sommation (11) à l'entrée (R1) d'un circuit de régulation (12),
   - l'écart dans le temps (d/dt) de la vitesse de rotation d'entrée ($n_{IN}$) de la boîte de vitesses est réglé au moyen d'un second circuit de régulation (2) qui est subordonné au premier circuit de régulation (1) et est utilisé en tant que régulateur de variation de la vitesse de rotation, un circuit de sommation (21) étant relié, au niveau (R2) du deuxième circuit de régulation subordonné (2), à la sortie (RA1) du circuit de régulation (12) du premier circuit de régulation (1),

   caractérisé en ce

   - que la vitesse de rotation d'entrée ($n_{IN}$) de la boîte de vitesses, est calculée sur la base du produit de la vitesse de rotation de sortie ($n_{OUT}$) de la boîte de vitesses par le rapport de démultiplication (ÜV) de la boîte de vitesses, est réglée, et
   - que le circuit de sommation (11; 21) de l'un des deux circuits de régulation (1; 2) est chargé par une valeur de correction (KW), qui est formée par un circuit de correction (3) et dépend de la valeur (FW) d'une fonction de correction (KF) et qui est prédéterminée par les plages de régulation (RB1, RB2, RB3, RB4, RB5) pour un comportement de régulation différent.

2. Procédé selon la revendication 1, **caractérisé en ce que** le nombre, les limites de zones et le comportement de régulation pour les zones de régulation (RB1, RB2, RB3, RB4, RB5) sont prédéterminés sur la base de paramètres ou de conditions marginales, qui dépendent du fonctionnement du véhicule automobile, par l'allure de la fonction de correction (KF).

3. Procédé selon la revendication 2, caractérisé en ce le nombre, les limites de zones et le comportement de régulation pour les zones de régulation (RB1, RB2, RB3, RB4, RB5) sont prédéterminés de la situation de la chaussée et/ou de la vitesse du véhicule automobile et/ou du rapport de démultiplication (ÜV) de la boîte de vitesses et/ou du type de conducteur et/ou de la taille de l'écart de régulation.

4. Procédé selon l'une des revendications 1 à 3, **caractérisé en ce qu'**avec la valeur de correction (KW) on prédétermine comme gammes de régulation:

   - au moins une zone de régulation normal (RB3), dans laquelle il ne se produit aucune influence du comportement de régulation;
   - au moins une zone de régulation contrôlée (RB1, RB5), dans laquelle il se produit une influence du comportement de régulation,
   - respectivement une zone de transition (RB2, RB4) entre une zone de régulation contrôlée (RB2, RB5) et une zone de régulation normal (RB3).

5. Procédé selon la revendication 4, **caractérisé en ce que** dans les zones de régulation contrôlée (RB2, RB5), l'effet de la régulation sur la grandeur de régulation constituée par le rapport (ÜV) de démultiplication de la boîte de vitesses est supprimé au moins dans une large mesure.

6. Procédé selon la revendication 5, **caractérisé en ce que** dans les zones réglées contrôlées (RB1, RB5), l'effet de la régulation sur la grandeur de régulation constituée par le rapport (ÜV) de démultiplication de la boîte de vitesses est complètement supprimé.

7. Procédé selon l'une des revendications 4 à 6, caractérisé en ce les zones de transition (RB2, RB4) sont choisies de telle sorte que la transition entre les zones de régulation contrôlées (RB1, RB5) et les zones normales de régulation (RB3) s'effectuent de façon brusque.

8. Procédé selon l'une des revendications 4 à 6, **caractérisé en ce que** les zones de transition (RB2, RB4) sont choisies de telle sorte que la transition entre les zones de régulation contrôlées (RB2, RB5) et les zones de régulation normales (RB3) s'effectuent d'une manière uniforme et/ou continue.

FIG. 1

FIG. 2